# FASCICULE DE BREVET EUROPEEN

(11) **EP 2 036 050 B1**
(45) Date de publication et mention de la délivrance du brevet: **14.07.2010**
(21) Numéro de dépôt: 07788945.9
(22) Date de dépôt: 12.04.2007
(51) Int. Cl.: G07C 9/00, H04B 5/00

(54) **DISPOSITIF DE COUPLAGE ENTRE UN IDENTIFIANT-TRANSPONDEUR ET UNE STATION DE BASE D'UN VÉHICULE AUTOMOBILE**
VORRICHTUNG ZUR KOPPLUNG EINES IDENTIFIKATIONSTRANSPONDERS AN DIE BASISSTATION EINES KRAFTFAHRZEUGS
DEVICE FOR COUPLING BETWEEN AN IDENTIFIER-TRANSPONDER AND A BASE STATION OF A MOTOR VEHICLE

(30) Priorité: 03.07.2006 FR 0605989
(43) Date de publication de la demande: 18.03.2009
(73) Titulaire: Renault S.A.S., 92100 Boulogne-Billancourt (FR)
(72) Inventeur: CHARDON, Robert, F-92260 Fontenay-aux-Roses (FR); FRANCE, Olivier, F-78000 Versailles (FR); LIPS, Mathieu, F-78370 Plaisir (FR); MARTIN, Franck, F-92240 Malakoff (FR)
(86) Numéro de dépôt international: PCT/FR2007/051109
(87) Numéro de publication internationale: WO 2008/003876

(56) Documents cités:
- WO-A-98/02980
- DE-C1- 4 430 360
- FR-A1- 2 607 264
- US-B1- 6 323 566

## Description

L'invention concerne le couplage entre un identifiant-transpondeur et une station de base, également appelée bague, montée à bord d'un véhicule automobile.

Plus particulièrement, l'invention concerne un dispositif permettant de transférer des signaux entre un identifiant-transpondeur et le calculateur de bord d'un véhicule automobile afin d'authentifier l'identifiant.

Un tel dispositif de couplage est généralement intégré à une station de base, qui communique par couplage magnétique avec l'identifiant afin d'autoriser ou non le démarrage du véhicule par traitement des signaux issus de l'identifiant.

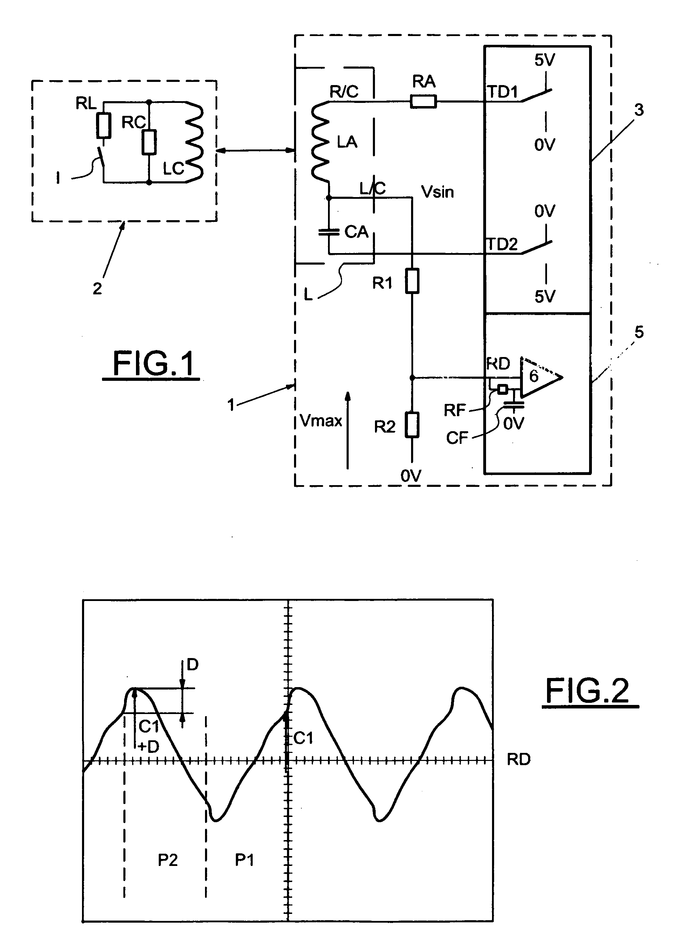

On a représenté sur la figure 1 l'architecture générale d'un dispositif de couplage conventionnel, désigné par la référence numérique générale 1, qui communique par couplage magnétique avec un identifiant-transpondeur 2.

Sur cette figure 1, l'identifiant-transpondeur est modélisé par un circuit RL, constitué par l'association de deux résistances RL et RC disposées en parallèle et d'une self LC raccordée en parallèle sur les deux résistances RL et RC. Un interrupteur I permet de faire varier la charge globale de l'identifiant, en raccordant sélectivement la résistance RL en parallèle sur la résistance RC.

En ce qui concerne le dispositif de couplage 1, celui-ci comporte essentiellement, dans l'exemple de réalisation illustré à la figure 1, un circuit résonnant, constitué par l'association d'une résistance RA, d'une self LA et d'un condensateur CA disposés en série, et un générateur de signaux carrés 3 délivrant deux tensions alternatives, à savoir une première tension alternative TD1 et une deuxième tension alternative TD2 en opposition de phase avec TD1.

Comme on le conçoit, la présence de l'identifiant-transpondeur 2 provoque une modification de l'impédance de charge du circuit résonnant et une modulation d'amplitude du signal aux bornes de l'impédance LA. Du fait du facteur de couplage très faible entre la station de base L, dans laquelle sont placés l'inductance LA et le condensateur CA, et la bobine LC de l'identifiant, la variation d'amplitude est de l'ordre de 0,5 % du signal sinusoïdal Vₛᵢₙ engendré par le circuit résonnant.

Un démodulateur 5 assure une démodulation du signal issu du circuit résonnant afin de récupérer l'information issue de l'identifiant-transpondeur 2 dans le but de vérifier que le code de l'identifiant-transpondeur correspond à celui de l'identifiant autorisé à démarrer le véhicule.

Le démodulateur est, par exemple, constitué par un comparateur de haute sensibilité capable de détecter une variation d'amplitude typique de l'ordre de 5 mV sur un signal compris entre 3 et 5 volts.

Afin d'adapter le niveau du signal sinusoïdal issu du circuit résonnant à celui du démodulateur, un pont diviseur, constitué par l'association en série de deux résistances R1 et R2 prélève la tension au point L/C entre la self LA et la condensateur CA du circuit résonnant et atténue ce signal d'un rapport K (K=R2/(R1+R2)) de manière à être compatible avec la plage de tension d'entrée Vₘₐₓ au point RD du démodulateur 5.

Le démodulateur 5 comprend par exemple un comparateur 6 dont la borne non inverseuse reçoit le signal issu du pont diviseur et dont la borne inverseuse reçoit la valeur moyenne du signal modulé, élaboré à partir d'un filtre constitué par l'association d'une résistance RF et d'un condensateur CF.

Grâce à cet agencement, le comparateur change d'état au rythme de la modulation.

Mais la résistance interne RF du filtre a une valeur typique de l'ordre de 100 kΩ. Etant donné la très faible variation d'amplitude du signal présenté sur la borne non inverseuse du comparateur 6, de l'ordre d'un dizaine de mV, toute résistance de fuite créée par la présence du condensateur CF, en raison par exemple d'humidité ou d'impuretés déposées sur un circuit imprimé utilisé pour la réalisation du circuit, peut provoquer un décalage du seuil de comparaison du signal RD. Par ailleurs, toute irrégularité de tension au niveau du générateur de crête du générateur de signaux carrés se propage, par l'intermédiaire du circuit résonnant et du pont diviseur, sur l'entrée du circuit démodulateur. Ainsi, ce bruit s'ajoute au signal modulé, ce qui engendre une perte de sensibilité du dispositif de couplage.

Au vu de ce qui précède, le but de l'invention est de pallier les inconvénients des dispositifs de couplage traditionnels qui assurent une liaison entre un identifiant-transpondeur et un calculateur embarqué à bord d'un véhicule automobile.

L'invention a donc pour objet un dispositif de couplage entre un identifiant-transpondeur et un calculateur embarqué à bord d'un véhicule automobile, comprenant un circuit résonnant à impédance variable sous l'effet de l'identifiant-transpondeur, qui est alimenté à partir de deux tensions alternatives en opposition de phase, et un circuit démodulateur assurant une démodulation du signal issu du circuit résonnant.

Selon une caractéristique générale du dispositif de couplage, celui-ci comporte des moyens pour supprimer, dans le signal issu du circuit résonnant, une composante correspondant à une première tension alternative, parmi lesdites tensions alternatives.

Selon une autre caractéristique de l'invention, les moyens pour supprimer ladite composante comprennent des moyens pour ajouter audit signal issu du circuit résonnant une deuxième tension alternative correspondant à l'autre tension d'alimentation.

Par exemple, les moyens pour ajouter audit signal issu du circuit résonnant ladite autre tension alternative comprennent une résistance raccordée entre l'une des bornes du circuit résonnant auquel est appliqué ladite deuxième tension et le circuit démodulateur.

Selon encore une autre caractéristique de l'invention, le dispositif comporte des moyens de filtrage aptes à supprimer une composante continue engendrée par l'ajout de ladite tension alternative.

Par exemple, ces moyens de filtrage comprennent un condensateur raccordé en série entre le circuit résonnant et le circuit démodulateur.

Dans un mode de réalisation, le dispositif peut en outre comporter des deuxièmes moyens de filtrage pour filtrer les bruits de sommation.

Par exemple, ces moyens de filtrage comprennent un condensateur disposé entre l'entrée du circuit démodulateur et la masse.

Dans encore un autre mode de réalisation, le circuit résonnant comprenant une résistance, une self et un condensateur disposé en série, le dispositif de couplage peut en outre comporter des troisièmes moyens de filtrage pour filtrer la tension délivrée à la self.

Par exemple, les troisièmes moyens de filtrage comprennent des condensateurs de filtrage raccordés l'un entre la masse et la borne de la self recevant la tension alternative correspondante et l'autre, entre la masse et la borne du condensateur du circuit résonnant recevant la tension alternative correspondante.

Le dispositif peut en outre comporter une résistance de limitation de charge raccordée en série sur le noeud commun entre le condensateur du circuit résonnant et ledit condensateur de filtrage.

Par ailleurs, le dispositif de couplage peut comporter un circuit détecteur de crête dans le signal issu du circuit résonnant disposé entre le circuit démodulateur et les deuxièmes moyens de filtrage.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1, dont il a déjà été fait mention, illustre l'architecture générale d'un ensemble identifiant-transpondeur-dispositif de couplage selon l'état de la technique ;
- la figure 2 illustre l'évolution en fonction du temps du signal fourni au démodulateur du dispositif de la figure 1 ;
- la figure 3 illustre un premier mode de réalisation d'un dispositif de couplage conforme à l'invention ;
- la figure 4 illustre un autre mode de réalisation d'un dispositif de couplage conforme à l'invention ;
- la figure 5 illustre l'évolution en fonction du temps du signal délivré au démodulateur du circuit de la figure 4 ;
- la figure 6 illustre encore un autre mode de réalisation d'un dispositif de couplage conforme à l'invention ;
- la figure 7 montre un quatrième exemple de réalisation d'un dispositif de couplage selon l'invention ; et
- les figures 8 et 9 sont des oscillogrammes montrant l'évolution en fonction du temps du signal fourni au démodulateur après ajout d'une résistance à l'une des bornes du circuit résonnant d'une part, et ajout d'un canalisateur entre cette résistance et le démodulateur, d'autre part.

En référence à la figure 2, le signal RD délivré au démodulateur 5 a une forme globalement sinusoïdale mais comporte des irrégularités sous la forme d'un décalage D causé par la tension alternative TD2.

En d'autres termes, le signal RD délivré au comparateur 6 du démodulateur comporte, sur chaque période, une phase P1 au cour de laquelle le signal RD est constitué par une composante utile C1 et une phase P2 au cours de laquelle le signal RD est constitué par la somme du signal utile C1 et du décalage D engendré par la deuxième tension alternative TD2.

Ainsi, le signal fourni en entrée du comparateur du démodulateur présente une composante de perturbation non négligeable.

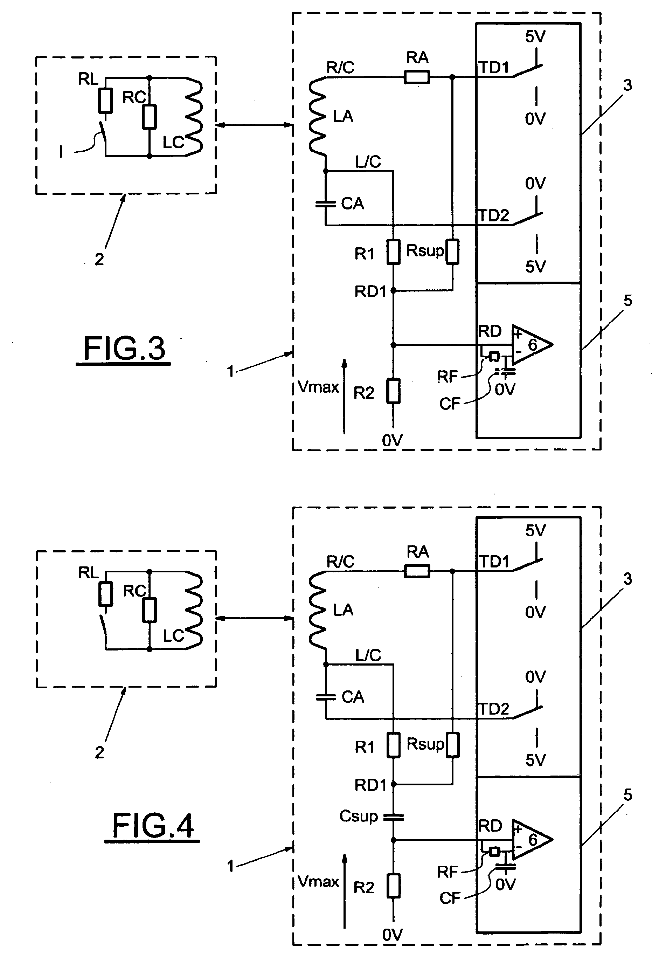

En référence à la figure 3, on va décrire un premier exemple de réalisation d'un dispositif de couplage selon l'invention permettant de supprimer la composante de perturbation dans le signal issu du circuit résonnant, qui est délivré au démodulateur.

Sur cette figure 3, des éléments identiques à ceux de la figure 1 sont désignés par les mêmes références.

On reconnaît ainsi le dispositif de couplage 1 qui communique par couplage magnétique avec l'identifiant-transpondeur.

De manière connue en soi, l'identifiant 2 comporte un circuit RL constitué par l'association d'une résistance de charge RC, d'une self de charge LC, et d'une résistance RL de modulation sélectivement raccordée en parallèle sur la résistance de charge RC au moyen d'un interrupteur I.

En ce qui concerne le dispositif de couplage 1, celui-ci comporte également, comme dans l'état de la technique, un circuit résonnant constitué par l'association d'une résistance RA, d'une self LA couplée magnétiquement avec la self LC de l'identifiant-transpondeur 2 et un condensateur CA, la self LA et le condensateur CA étant, par exemple, intégrés à une colonne de direction du véhicule automobile dans lequel le dispositif de couplage est embarqué pour récupérer les signaux issus de l'identifiant 2.

Le dispositif comporte en outre un générateur de signaux carrés 3 délivrant des signaux alternatifs TD1 et TD2 d'amplitude de 5 volts et en opposition de phase, fournis respectivement sur deux bornes du circuit résonnant. Ainsi, le premier signal TD1 est fourni à la résistance RA, tandis que l'autre signal TD2 est délivré au condensateur CA du circuit résonnant.

Un pont diviseur, constitué par l'association en série de deux résistances R1 et R2 assure le prélèvement du signal sinusoïdal présent au noeud L/C entre la self LA et le condensateur CA pour diminuer la tension délivrée au démodulateur 5 et, en particulier, au comparateur 6.

Comme dans l'état de la technique, le comparateur 6 assure une comparaison entre le signal RD issu du noeud commun entre les résistances R1 et R2 et la valeur moyenne du signal modulé élaborée par exemple à partir d'un filtre constitué par l'association d'une résistance RF et d'un condensateur de filtrage CF.

Dans le but de supprimer l'essentiel de la composante de perturbation, constituée par la tension alternative TD2 fournie à l'une des bornes du circuit résonnant, le dispositif visible sur la figure 1 comporte une résistance Rₛᵤₚ raccordée, par l'une de ses bornes, à l'autre borne du circuit résonnant et, par son autre borne, au noeud commun entre les résistances R1 et R2 du pont diviseur.

En d'autres termes, dans la mesure où la première tension alternative TD1 et la deuxième tension alternative TD2 sont en opposition de phase, dans le but de supprimer la composante de perturbation, qui correspond à la deuxième tension alternative TD2, la résistance Rₛᵤₚ est utilisée pour ajouter, dans le signal délivré au démodulateur 5, la première tension alternative TD1.

A cet effet, la résistance Rₛᵤₚ a la même valeur que la résistance R1 du pont diviseur.

Du fait de la diminution d'amplitude au noeud RD1 commun entre les résistances R1 et R2 du pont diviseur, la résistance R2 est augmentée de manière à obtenir au point RD d'entrée du démodulateur, une tension égale à la tension Vₘₐₓ du montage initial.

L'amélioration de la sensibilité du circuit ainsi obtenue est due à l'atténuation du pont diviseur d'un rapport K' inférieur au rapport K du montage initial.

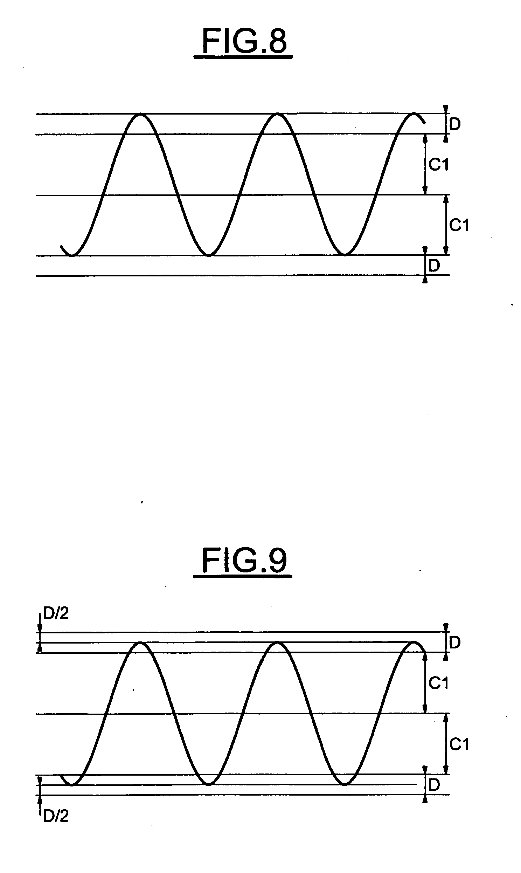

Comme le montre l'oscillogramme de la figure 8, le signal au point RAD1 est alors, selon l'exemple de réalisation illustré à la figure 3, un signal sinusoïdal superposé à une tension continue égale à (TD1+TD2/2), d'amplitude C₁ + D.

Mais l'ajout de la résistance Rₛᵤₚ crée une composante continue au point RD1.

En référence à l'oscillogramme de la figure 9, pour supprimer cette composante continue, on place entre la résistance Rₛᵤₚ et le démodulateur RD un condensateur Cₛᵤₚ, comme illustré à la figure 4.

Comme précédemment, du fait de la diminution d'amplitude au point RD1, la valeur de la résistance R2 du pont diviseur est augmentée de manière à obtenir une tension au point RD égale à la tension maximale Vₘₐₓ du montage initial.

L'amélioration de la sensibilité du circuit est encore due à l'atténuation du pont diviseur, qui présente un rapport d'atténuation K"<K'<K.

On adapte ainsi la valeur des résistances R₁ et Rₛᵤₚ pour obtenir une sensibilité maximale.

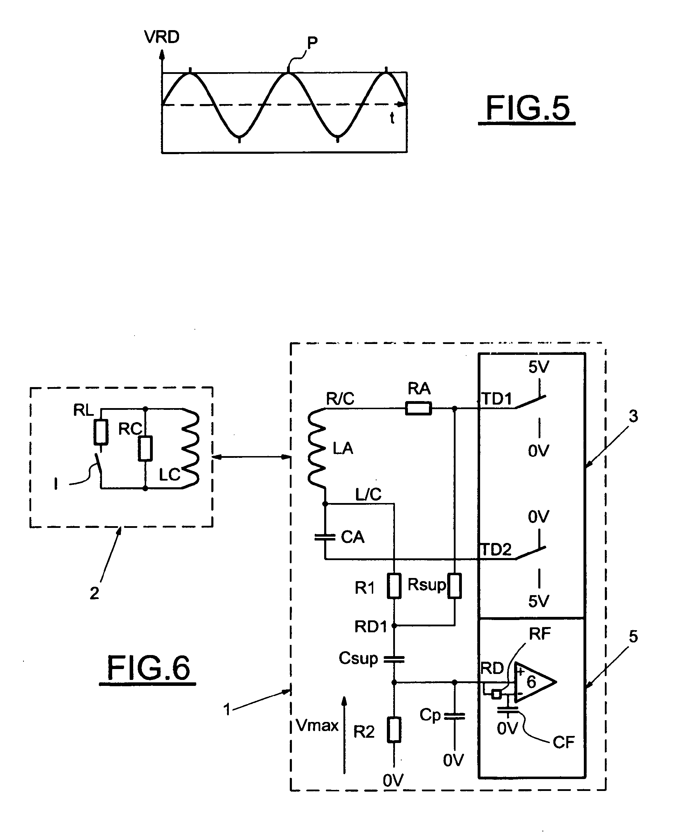

En se référant maintenant à la figure 5, le signal RD résultant de la suppression, dans le signal issu du circuit résonnant, de la composante TD2, présente une forme essentiellement sinusoïdale.

Des pointes de tension P subsistent au niveau des valeurs de crête du signal RD. Ces pointes de tension, de très faible durée, correspondent au décalage de phase entre les signaux TD1 et TD2.

En référence à la figure 6, ces pointes de tension sont supprimées en insérant un condensateur de filtrage Cp entre l'entrée du démodulateur 5 et la masse, ou, en d'autres termes, entre la borne non inverseuse du comparateur 6 et la masse.

Comme précédemment, du fait de la diminution d'amplitude au point RD1, engendrée par la présence de ce condensateur Cp, la valeur de la résistance R2 est augmentée de manière à obtenir la tension au point RD égale à la tension Vₘₐₓ du montage initial.

L'amélioration de sensibilité est due à l'atténuation du pont diviseur d'un facteur d'atténuation K'''<K"<K'<K.

Comme on le conçoit, dans les différents modes de réalisation décrits précédemment, une amélioration de la sensibilité du circuit est obtenue en supprimant la composante causée par la deuxième tension alternative TD2. Cette suppression est obtenue en ajoutant, dans le signal fourni au démodulateur, la première tension alternative TD1, en utilisant une résistance Rₛᵤₚ. Par exemple, la valeur de cette résistance est de l'ordre de 46 kΩ. Cette sommation supprime les sauts de tension qui existaient dans les circuits conventionnels Mais elle ajoute une composante continue de l'ordre de 2,5 volts. Cette composante peut être supprimée en utilisant un condensateur Cₛᵤₚ en série avec l'ensemble constitué par le résistances R1 et Rₛᵤₚ.

La valeur du condensateur Cₛᵤₚ doit être suffisamment élevée pour présenter une faible impédance à 125 KhZ et suffisamment faible pour être chargée avant la séquence de précharge du condensateur du circuit d'élaboration de la valeur moyenne du signal modulé, qui arrive généralement, dans l'application envisagée, 256 µs après commutation des signaux TD1 et TD2.

A titre d'exemple, la résistance Rₛᵤₚ est égale à 22 kΩ, la résistance R2 est égale à 33 kΩ et le condensateur Cₛᵤₚ égal à 1 nF.

Il a été constaté que l'ajout de la résistance Rₛᵤₚ et du condensateur Cₛᵤₚ permet d'obtenir une augmentation de la profondeur de modulation de 40 % par rapport au montage initial et une réduction par 3 du bruit d'alimentation du générateur de signaux carrés.

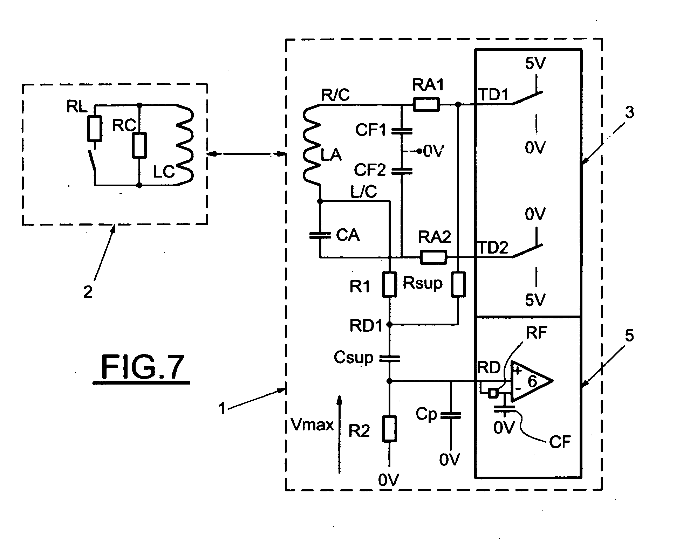

Selon encore un autre mode de réalisation, illustré à la figure 7, les tensions alternatives TD1 et TD2 fournies au circuit résonnant sont filtrées en utilisant deux condensateurs CF1 et CF2 de filtrage.

En particulier, comme représenté à la figure 7, un premier condensateur CF1 est raccordé entre la masse et le noeud commun entre la self LA et la résistance du circuit résonnant.

Le deuxième condensateur CF2 est raccordé de manière similaire. Il est en effet raccordé entre, d'une part, la masse, et d'autre part, au condensateur CA.

Le premier condensateur de filtrage CF1 est chargé et déchargé à travers la résistance RA du circuit résonnant, donnant ainsi un courant de crête de l'ordre de 50 mA.

Par contre, le condensateur CF2 est chargé et déchargé à travers la capacité CA. Le courant est limité à une valeur comprise entre 200 et 400 microampères. Cette pointe de courant de faible durée, de l'ordre de quelques dizaines de nanosecondes, provoque un bruit d'alimentation. Comme représenté, dans le but de supprimer ce bruit parasite, une résistance RA2 est ajoutée en série sur le condensateur CA. On partage alors la valeur de la résistance RA initiale en deux parties égales entre les résistances RA1 et RA2.

## Revendications

1. Dispositif de couplage entre un identifiant-transpondeur (2) et un calculateur embarqué à bord d'un véhicule automobile, comprenant un circuit résonnant (RA, LA, CA) à impédance variable sous l'effet de l'identifiant-transpondeur (2), qui est alimenté à partir de deux tensions alternatives (TD1, TD2) en opposition de phase, et un circuit démodulateur (5) assurant une démodulation du signal issu du circuit résonnant, **caractérisé en ce qu'**il comporte des moyens (Rₛᵤₚ) pour supprimer, dans le signal issu du circuit résonnant, une composante correspondant à une première tension alternative (TD2) parmi lesdites tensions alternatives (TD1, TD2).

2. Dispositif selon la revendication 1, **caractérisé en ce que** les moyens pour supprimer ladite composante comprennent des moyens pour ajouter audit signal issu du circuit résonnant (RA, LA, CA) une deuxième tension alternative TD1 correspondant à l'autre tension alternative.

3. Dispositif selon la revendication 2, **caractérisé en ce que** les moyens pour ajouter audit signal issu du circuit résonnant ladite autre tension alternative comprennent une résistance (Rₛᵤₚ) raccordée entre l'une des bornes du circuit résonnant auquel est appliquée ladite deuxième tension (TD1) et le circuit démodulateur (5).

4. Dispositif selon l'une des revendications 2 et 3, **caractérisé en ce qu'**il comporte des moyens de filtrage (Cₛᵤₚ) aptes à supprimer une composante continue engendrée par l'ajout de ladite tension alternative.

5. Dispositif selon la revendication 4, **caractérisé en ce que** les moyens de filtrage comprennent un condensateur (Cₛᵤₚ) raccordé entre le circuit démodulateur et le circuit résonnant.

6. Dispositif selon l'une quelconque des revendications 2 à 5, **caractérisé en ce qu'**il comporte des deuxièmes moyens de filtrage (Cₚ) pour filtrer les bruits de sommation.

7. Dispositif selon la revendication 6, **caractérisé en ce que** les moyens de filtrage additionnels comprennent un condensateur (Cₚ) disposé entre l'entrée du circuit démodulateur et la masse.

8. Dispositif selon l'une des revendications 6 et 7, **caractérisé en ce qu'**il comporte en outre un circuit détecteur de crête dans le signal issu du circuit résonnant disposé entre le circuit démodulateur et les deuxièmes moyens de filtrage.

9. Dispositif selon l'une quelconque des revendications 1 à 8, **caractérisé en ce que** le circuit résonnant comprenant une résistance (RA), une self (LA) et un condensateur (CA) disposé en série, il comporte des troisièmes moyens de filtrage pour filtrer la tension délivrée à la self.

10. Dispositif selon la revendication 9, **caractérisé en ce que** les troisièmes moyens de filtrage comprennent des capacités de filtrage (CF1, CF2) raccordées l'une (CF1) entre la masse et la borne de la self recevant la tension alternative (TD1) correspondante, et l'autre entre la masse et la borne du condensateur du circuit résonnant recevant la tension alternative (TD2) correspondante.

11. Dispositif selon la revendication 10, **caractérisé en ce qu'**il comporte en outre une résistance de limitation de charge (RA2) raccordée en série sur un noeud commun entre le condensateur (CA) du circuit résonnant et ledit condensateur (CF2) de filtrage.

## Claims

1. Device providing coupling between an identifier-transponder (2) and a computer on board a motor vehicle, comprising a resonant circuit (RA, LA, CA) the impedance of which can vary under the effect of the identifier-transponder (2), which is powered with two AC voltages (TD1, TD2) in antiphase, and a demodulator circuit (5) that demodulates the signal from the resonant circuit, **characterized in that** it comprises means (Rₛᵤₚ) for eliminating, in the signal from the resonant circuit, a component that corresponds to a first AC voltage (TD2) from among said AC voltages (TD1, TD2).

2. Device according to Claim 1, **characterized in that** the means for eliminating said component comprise means for adding to said signal from the resonant circuit (RA, LA, CA) a second AC voltage TD1 that corresponds to the other AC voltage.

3. Device according to Claim 2, **characterized in that** the means for adding said other AC voltage to said signal from the resonant circuit comprise a resistor (Rₛᵤₚ) connected between one of the terminals of the resonant circuit to which said second voltage (TD1) is applied, and the demodulator circuit (5).

4. Device according to one of Claims 2 and 3, **characterized in that** it comprises filter means (Cₛᵤₚ) capable of eliminating a DC component generated by the addition of said AC voltage.

5. Device according to Claim 4, **characterized in that** the filter means comprise a capacitor (Cₛᵤₚ) connected between the demodulator circuit and the resonant circuit.

6. Device according to any one of Claims 2 to 5, **characterized in that** it comprises second filter means (Cₚ) for filtering the summing noise.

7. Device according to Claim 6, **characterized in that** the additional filter means comprise a capacitor (Cₚ) positioned between the input to the demodulator circuit and ground.

8. Device according to one of Claims 6 and 7, **characterized in that** it further comprises a peak detector circuit detecting the peak in the signal from the resonant circuit located between the demodulator circuit and the second filter means.

9. Device according to any one of Claims 1 to 8, **characterized in that**, with the resonant circuit comprising a resistor (RA), an inductor (LA) and a capacitor (CA) arranged in series, it comprises third filter means for filtering the voltage delivered to the inductor.

10. Device according to Claim 9, **characterized in that** the third filter means comprise filtering capacitors (CF1, CF2), one of them (CF1) connected between ground and that terminal of the inductor that receives the corresponding AC voltage (TD1), and the other of them connected between ground and that terminal of the capacitor of the resonant circuit that receives the corresponding AC voltage (TD2).

11. Device according to Claim 10, **characterized in that** it further comprises a charge limiting resistor (RA2) connected in series to a node common to the capacitor (CA) of the resonant circuit and to said filtering capacitor (CF2).

## Patentansprüche

1. Vorrichtung zur Kopplung zwischen einem Identifikator-Transponder (2) und einem an Bord eines Kraftfahrzeugs befindlichen Rechner, die einen Resonanzkreis (RA, LA, CA) mit unter der Wirkung des Identifikator-Transponders (2) variabler Impedanz, der ausgehend von zwei gegenphasigen Wechselspannungen (TD1, TD2) gespeist wird, und einen Demodulatorkreis (5) enthält, der eine Demodulation des vom Resonanzkreis stammenden Signals gewährleistet, **dadurch gekennzeichnet, dass** sie Einrichtungen (Rₛᵤₚ) aufweist, um in dem vom Resonanzkreis stammenden Signal eine Komponente zu unterdrücken, die einer ersten Wechselspannung (TD2) der zwei Wechselspannungen (TD1, TD2) entspricht.

2. Vorrichtung nach Anspruch 1, **dadurch gekennzeichnet, dass** die Einrichtungen zur Unterdrückung der Komponente Einrichtungen enthalten, um zu dem vom Resonanzkreis (RA, LA, CA) stammenden Signal eine zweite Wechselspannung TD1 hinzuzufügen, die der anderen Wechselspannung entspricht.

3. Vorrichtung nach Anspruch 2, **dadurch gekennzeichnet, dass** die Einrichtungen zur Hinzufügung der anderen Wechselspannung zu dem vom Resonanzkreis stammenden Signal einen Widerstand (Rₛᵤₚ) enthalten, der zwischen einer der Klemmen des Resonanzkreises, an die die zweite Spannung (TD1) angelegt ist, und dem Demodulatorkreis (5) angeschlossen ist.

4. Vorrichtung nach einem der Ansprüche 2 und 3, **dadurch gekennzeichnet, dass** sie Filtereinrichtungen (Cₛᵤₚ) aufweist, die eine Gleichkomponente unterdrücken können, die durch die Hinzufügung der Wechselspannung erzeugt wird.

5. Vorrichtung nach Anspruch 4, **dadurch gekennzeichnet, dass** die Filtereinrichtungen einen Kondensator (Cₛᵤₚ) enthalten, der zwischen dem Demodulatorkreis und dem Resonanzkreis angeschlossen ist.

6. Vorrichtung nach einem der Ansprüche 2 bis 5, **dadurch gekennzeichnet, dass** sie zweite Filtereinrichtungen (Cₚ) enthält, um das Summierungsrauschen zu filtern.

7. Vorrichtung nach Anspruch 6, **dadurch gekennzeichnet, dass** die zusätzlichen Filtereinrichtungen einen Kondensator (Cₚ) enthalten, der zwischen dem Eingang des Demodulatorkreises und Masse angeordnet ist.

8. Vorrichtung nach einem der Ansprüche 6 und 7, **dadurch gekennzeichnet, dass** sie außerdem einen Schaltkreis zur Erfassung von Spitzen im vom Resonanzkreis stammenden Signal aufweist, der zwischen dem Demodulatorkreis und den zweiten Filtereinrichtungen angeordnet ist.

9. Vorrichtung nach einem der Ansprüche 1 bis 8, **dadurch gekennzeichnet, dass** der in Reihe einen Widerstand (RA), eine Drosselspule (LA) und einen Kondensator (CA) enthaltende Resonanzkreis dritte Filtereinrichtungen aufweist, um die an die Drosselspule gelieferte Spannung zu filtern.

10. Vorrichtung nach Anspruch 9, **dadurch gekennzeichnet, dass** die dritten Filtereinrichtungen Filterkondensatoren (CF1, CF2) enthalten, von denen einer (CF1) zwischen Masse und der Klemme der Drosselspule, die die entsprechende Wechselspannung (TD1) empfängt, und der andere zwischen Masse und der Klemme des Kondensators des Resonanzkreises angeschlossen ist, die die entsprechende Wechselspannung (TD2) empfängt.

11. Vorrichtung nach Anspruch 10, **dadurch gekennzeichnet, dass** sie außerdem einen Lastbegrenzungswiderstand (RA2) aufweist, der in Reihe an einen gemeinsamen Knoten zwischen dem Kondensator (CA) des Resonanzkreises und dem Filterkondensator (CF2) angeschlossen ist.
